# EUROPÄISCHE PATENTSCHRIFT

(11) **EP 4 314 724 B1**
(45) Veröffentlichungstag und Bekanntmachung des Hinweises auf die Patenterteilung: **27.08.2025**
(21) Anmeldenummer: 22716354.0
(22) Anmeldetag: 17.03.2022
(51) Int. Cl.: G01F 5/00, G01F 15/00, G01F 1/684

(54) **LUFTMASSENSENSOR UND KRAFTFAHRZEUG**
AIR MASS SENSOR AND MOTOR VEHICLE
CAPTEUR DE MASSE D'AIR ET VÉHICULE AUTOMOBILE

(30) Priorität: 30.03.2021 DE 102021203217
(43) Veröffentlichungstag der Anmeldung: 07.02.2024
(73) Patentinhaber: Schaeffler Technologies AG & Co. KG, 91074 Herzogenaurach (DE)
(72) Erfinder: HEISS, Marion, 80687 München (DE); MEYER, Andreas, 80687 München (DE); WEININGER, Holger, 80687 München (DE); LESSER, Martin, 80687 München (DE); MILLIES, Thomas, 80687 München (DE); SOTKOVSKY, Radim, 80687 München (DE); KUSYN, Petr, 80687 München (DE)
(74) Vertreter: Vitesco Technologies
(86) Internationale Anmeldenummer: PCT/EP2022/056975
(87) Internationale Veröffentlichungsnummer: WO 2022/207338

(56) Entgegenhaltungen:
- DE-A1- 102017 218 893
- DE-A1- 19 542 126
- DE-B4- 19 964 452
- US-B2- 8 763 452
- US-B2- 9 587 970

## Beschreibung

Die vorliegende Erfindung betrifft einen Luftmassensensor zum Bestimmen eines Luftmassenstroms, mit einem Gehäuse und mit einer Sensorelektronik, wobei die Sensorelektronik zumindest teilweise in einer Elektronikkammer des Gehäuses angeordnet ist und wobei das Gehäuse einen Strömungskanal zum Durchleiten eines zu messenden Luftmassenstroms durch das Gehäuse aufweist. Weiter betrifft die Erfindung ein Kraftfahrzeug mit einem solchen Luftmassensensor.

Ein Luftmassensensor der eingangs genannten Art ist z.B. aus den Dokumenten US 8,763,452 B2, DE 10 2017 218893 A1 und DE 10 2018 219 729 A1 bekannt.

Ein solcher Luftmassensensor kann beispielsweise zum Bestimmen eines Luftmassenstroms in einer Ansaugleitung eines Verbrennungsmotors eines Kraftfahrzeugs eingesetzt werden. Hierbei kann es zu Schwingungsanregungen im Bereich der Eigenfrequenzen des Strömungskanals kommen, die das Messergebnis beeinträchtigen. So kann z.B. ein Abgasturbolader hochfrequente Druckpulsationen von bis zu 20 kHz in dem zu messenden Luftmassenstrom hervorrufen. Für bestimmte Anregungsfrequenzen bzw. Anregungsfrequenzbereiche kann es daher zu starken Abweichungen zwischen dem gemessenen Luftmassenstrom und dem tatsächlichen Luftmassenstrom kommen. Diese Abweichungen können sich nachteilig auf den Motorbetrieb auswirken.

Vor diesem Hintergrund liegt der Erfindung die technische Problemstellung zugrunde, einen verbesserten Luftmassensensor anzugeben, der insbesondere robuster gegenüber Schwingungsanregungen von Abgasturboladern ist. Weiter soll ein Kraftfahrzeug mit einem solchen Sensor angegeben werden.

Die voranstehend beschriebene, technische Problemstellung wird jeweils durch die unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung einen Luftmassensensor zum Bestimmen eines Luftmassenstroms, mit einem Gehäuse und mit einer Sensorelektronik, wobei die Sensorelektronik zumindest teilweise in einer Elektronikkammer des Gehäuses angeordnet ist und wobei das Gehäuse einen Strömungskanal zum Durchleiten eines zu messenden Luftmassenstroms durch das Gehäuse aufweist. Der Luftmassensensor zeichnet sich dadurch aus, dass der Strömungskanal und die Elektronikkammer über eine Öffnung miteinander verbunden sind, wobei die Elektronikkammer ein Druckausgleichsvolumen für den Strömungskanal bildet.

Die Öffnung ermöglicht daher eine Fluidverbindung zwischen dem Strömungskanal und der Elektronikkammer, so dass ein Teil des zu messenden Luftmassenstroms aus dem Strömungskanal in die Elektronikkammer strömen kann. Auf diese Weise können insbesondere die Amplitude von Schwingungsanregungen infolge hochfrequenter Druckpulsationen von Turboladern reduziert werden, so dass auch für kritische Anregungsfrequenzen eine zuverlässige Messung stattfinden kann. Insbesondere können auf diese Weise Eigenfrequenzen des Strömungskanals eliminiert oder eine jeweilige Schwingungsantwort im Bereich einer oder mehrerer Eigenfrequenzen reduziert oder werden.

Es kann vorgesehen sein, dass in der Elektronikkammer angeordnete Komponenten der Sensorelektronik zumindest teilweise oder vollständig in einer Vergussmasse vergossen bzw. von einer Vergussmasse umhüllt sind, um die Komponenten der Sensorelektronik vor Umgebungseinflüssen zu schützen, vorliegend insbesondere vor dem zu messenden Luftmassenstrom zu schützen.

Es kann vorgesehen sein, dass ein freies Volumen der Elektronikkammer, das zum Druckausgleich vorgesehen ist, mehr als 0,5 cm³ beträgt und weniger als 20 cm³ beträgt, insbesondere mehr als 1 cm³ beträgt und weniger als 10 cm³ beträgt.

Die Elektronikkammer und der Strömungskanal können jeweils mit einer Abdeckung bzw. Deckel des Gehäuses abgedeckt sein. Die Öffnung kann zumindest teilweise in den Deckel der Elektronikkammer eingebracht sein und/oder von dem Deckel der Elektronikkammer begrenzt sein.

Die Öffnung kann einen Spalt aufweisen oder aus einem Spalt bestehen. Wenn vorliegend von einem Spalt gesprochen wird, so kann dessen Breie wenigstens das Fünffache seiner Höhe aufweisen, insbesondere wenigstens das Zehnfache seiner Höhe aufweisen. Der Spalt ist daher eine längliche, flache Öffnung.

Der Spalt kann eine Höhe ausgewählt aus einem Bereich zwischen einschließlich 0,02 mm bis einschließlich 0,3 mm aufweisen, insbesondere eine Höhe ausgewählt aus einem Bereich zwischen einschließlich 0,05 mm bis einschließlich 0,1 mm aufweisen.

Der Spalt kann eine Breite ausgewählt aus einem Bereich zwischen einschließlich 0,1 mm bis einschließlich 10 mm aufweist, weiter insbesondere eine Breite ausgewählt aus einem Bereich zwischen einschließlich 1 mm bis einschließlich 5 mm aufweist.

Die Öffnung kann zumindest abschnittsweise einen polygonalen Querschnitt aufweisen, insbesondere einen rechteckigen oder dreieckigen Querschnitt aufweisen.

Alternativ oder ergänzend kann die Öffnung zumindest abschnittsweise einen kreis- oder bogenförmigen Querschnitt aufweisen.

Die Öffnung kann zumindest abschnittsweise eine Höhe ausgewählt aus einem Bereich zwischen einschließlich 0,02 mm bis einschließlich 3 mm aufweisen, insbesondere eine Höhe ausgewählt aus einem Bereich zwischen einschließlich 0,05 mm bis einschließlich 1 mm aufweisen.

Alternativ oder ergänzend kann die Öffnung zumindest abschnittsweise eine Breite ausgewählt aus einem Bereich zwischen einschließlich 0,5 mm bis einschließlich 10 mm aufweisen, insbesondere eine Breite ausgewählt aus einem Bereich zwischen einschließlich 1 mm bis einschließlich 5 mm aufweisen.

Die Öffnung kann einen Spalt und/oder einen oder mehrere Abschnitte mit polygonalem und/oder kreis- oder bogenförmigen Querschnitt haben. Die Abschnitte können an einem Deckel bzw. einer Abdeckung vorgesehene, Durchgangsöffnungen, Nuten, Fasen, Bohrungen oder dergleichen sein.

Die Öffnung kann segmentiert und insbesondere aus mehreren Durchgangsöffnungen gebildet sein, die den Strömungskanal mit der Elektronikkammer verbinden.

Die Öffnung kann einen luftdurchlässigen Filter oder eine luftdurchlässige Membran aufweisen, um ein Eindringen von Verschmutzungen, wie z.B. Staub-, Öl- und/oder Rußpartikeln in die Elektronikkammer zu verhindern. Der Filter kann insbesondere austauschbar an dem Gehäuse gehalten und/oder in einen Deckel bzw. eine Abdeckung der Elektronikkammer integriert sein.

Der Luftmassensensor kann neben dem Messen eines Luftmassenstroms ergänzende Funktionen aufweisen. Beispielsweise kann der Luftmassensensor zusätzlich zum Messen eines Luftmassenstroms zum Messen einer oder mehrerer der nachfolgend aufgelisteten Parameter eingerichtet sein: Druck des Luftmassenstroms; Feuchtigkeit des Luftmassenstroms; Temperatur des Luftmassenstroms.

Ein Messelement der Sensorelektronik des Luftmassensensors kann ein thermisches Messelement ist, insbesondere ein Heißfilm-Luftmassenmesselement sein. Ein solches Heißfilm-Luftmassenmesselement kann beispielsweise zumindest ein Heizelement und zwei Temperatursensoren aufweisen, die von dem Luftmassenstrom überströmt werden, wobei sich der Betrag des Luftmassenstroms aus den voneinander abweichenden gemessenen Temperaturen bzw. den Temperaturprofilen der Temperatursensoren ableiten lässt. Ein solches Heißfilm-Luftmassenmesselement ist beispielsweise in DE 10 2018 219 729 A1 beschrieben.

Es kann vorgesehen sein, dass die Öffnung zumindest abschnittsweise stromabwärts eines Messelements der Sensorelektronik angeordnet ist. "Stromabwärts" bedeutet, dass der Luftmassenstrom in dem Strömungskanal entlang der Strömungsrichtung betrachtet zuerst an dem Messelement und anschließend an der Öffnung entlang strömt bzw. die Öffnung dem Messelement entlang der Strömungsrichtung betrachtet nachgelagert ist.

Alternativ oder ergänzend kann vorgesehen sein, dass die Öffnung zumindest abschnittsweise stromaufwärts eines Messelements der Sensorelektronik angeordnet ist. "Stromaufwärts" bedeutet, dass der Luftmassenstrom in dem Strömungskanal entlang der Strömungsrichtung betrachtet zuerst an der Öffnung und anschließend an dem Messelement entlang strömt bzw. die Öffnung dem Messelement entlang der Strömungsrichtung betrachtet vorgelagert ist.

Alternativ oder ergänzend kann vorgesehen sein, die Öffnung zumindest abschnittsweise auf Höhe eines Messelements der Sensorelektronik angeordnet ist. "Auf Höhe" bedeutet, dass der Luftmassenstrom in dem Strömungskanal entlang der Strömungsrichtung betrachtet zeitgleich an der Öffnung und an dem Messelement entlang strömt. Mit anderen Worten liegen die Öffnung und das Messelement in einem Schnitt quer zur Strömungsrichtung betrachtet zumindest abschnittsweise in einer Ebene.

Es kann vorgesehen sein, dass der Strömungskanal einen Messkanal und einen Bypass bzw. Bypasskanal aufweist, wobei der Messkanal einen Teil eines in den Strömungskanal einströmenden Luftmassenstroms zu einer Messstelle der Sensorelektronik leitet und wobei der Bypasskanal einen Teil des in den Strömungskanal einströmenden Luftmassenstroms vor dem Erreichen der Messtelle abzweigt und aus dem Gehäuse abführt.

Es kann vorgesehen sein, dass ein erstes Wandungselement, das den Bypasskanal und den Messkanal zumindest abschnittsweise voneinander separiert, eine zumindest abschnittsweise reduzierte Wandungshöhe aufweist, so dass das erste Wandungselement zumindest abschnittsweise überströmbar ist und/oder eine Durchgangsöffnung aufweist, so dass das erste Wandungselement durchströmbar ist. Der Luftmassensensor zeichnet sich alternativ oder ergänzend dadurch aus, dass ein zweites Wandungselement, das den Bypasskanal und einen Einlass des Strömungskanals zumindest abschnittsweise voneinander separiert, eine zumindest abschnittsweise reduzierte Wandungshöhe aufweist, so dass das zweite Wandungselement zumindest abschnittsweise überströmbar ist und/oder eine Durchgangsöffnung aufweist, so dass das zweite Wandungselement durchströmbar ist.

Die reduzierte Wandungshöhe und/oder die Durchgangsöffnung ermöglichen daher eine zusätzliche Fluidverbindung innerhalb des Strömungskanals, um einen zusätzlichen Druckausgleich für den Messkanal zu schaffen. Auch auf diese Weise können insbesondere die Amplitude von Schwingungsanregungen infolge hochfrequenter Druckpulsationen von Turboladern reduziert werden, so dass auch für kritische Anregungsfrequenzen eine zuverlässige Messung stattfinden kann. Insbesondere können auch auf diese Weise Eigenfrequenzen des Strömungskanals eliminiert oder eine jeweilige Schwingungsantwort im Bereich einer oder mehrerer Eigenfrequenzen reduziert oder werden.

Es kann vorgesehen sein, dass das Gehäuse zusätzlich zu einer Einlassöffnung und einer Auslassöffnung des Strömungskanals und zusätzlich zum Bypasskanal mindestens eine Ausgleichsöffnung aufweist, die den Strömungskanal mit einer Umgebung des Gehäuses verbindet.

Die Ausgleichsöffnung ermöglicht daher eine Fluidverbindung zwischen dem Strömungskanal und der Umgebung des Gehäuses, so dass ein Teil des zu messenden Luftmassenstroms aus dem Strömungskanal in die Umgebung des Gehäuses strömen kann, um einen zusätzlichen Druckausgleich zu schaffen. Auch auf diese Weise können insbesondere die Amplitude von Schwingungsanregungen infolge hochfrequenter Druckpulsationen von Turboladern reduziert werden, so dass auch für kritische Anregungsfrequenzen eine zuverlässige Messung stattfinden kann. Insbesondere können auch auf diese Weise Eigenfrequenzen des Strömungskanals eliminiert oder eine jeweilige Schwingungsantwort im Bereich einer oder mehrerer Eigenfrequenzen reduziert oder werden.

Es können genau eine Ausgleichsöffnung oder zwei oder mehr Ausgleichsöffnungen vorgesehen sein.

Die Umgebung des Gehäuses kann insbesondere ein Innenraum eines Rohrs, einer Leitung oder dergleichen sein, innerhalb dessen bzw. innerhalb derer der Luftmassensensor zum Bestimmen des Luftmassenstroms angeordnet ist.

Die Ausgleichsöffnung kann eine Durchgangsöffnung sein, wie eine Bohrung oder dergleichen, die in eine Wandung des Gehäuses eingebracht ist.

Alternativ oder ergänzend kann die Ausgleichsöffnung zwischen Gehäuseteilen des Gehäuses gebildet sein. Soweit das Gehäuse beispielsweise ein erstes Gehäuseteil und ein zweites Gehäuseteil hat, die zu dem Gehäuse zusammengesetzt sind, kann die Ausgleichsöffnung eine Aussparung im Bereich einer Naht oder Fügekante sein, im Bereich derer das erste und zweite Gehäuseteil formschlüssig ineinandergreifen und/oder miteinander verbunden sind. Das erste Gehäuseteil kann beispielsweise ein Deckel oder eine Abdeckung sein. Das zweite Gehäuseteil kann ein Grundkörper des Gehäuses sein, an dem der Deckel befestigt ist.

Die Gehäuseteile können mittels eines Klebers miteinander verbunden sein, wobei die Ausgleichsöffnung zumindest teilweise an einen die Gehäuseteile verbindenden Kleber angrenzt.

Es kann vorgesehen sein, dass die Ausgleichsöffnung Teil einer unterbrochenen Klebenaht oder Teil einer unterbrochenen Kleberaupe ist. Die Ausgleichsöffnung kann daher eine Unterbrechung einer Klebenaht oder Kleberaupe sein, die die Gehäuseteile miteinander verbindet. Insbesondere bildet die Klebenaht oder Kleberaupe eine adhäsive Verbindung der Gehäuseteile und zudem eine Abdichtung des Strömungskanals gegenüber der Umgebung, wobei die Abdichtung lokal unterbrochen ist, um die Ausgleichsöffnung auszubilden.

Es kann vorgesehen sein, dass die Öffnung einen Abstand zu einem Messelement der Sensorelektronik aufweist, wobei der Abstand kleiner ist als 10 mm, insbesondere kleiner ist als 5 mm, insbesondere kleiner ist als 4 mm.

Alternativ oder ergänzend kann vorgesehen sein, dass die Öffnung, deren Höhe zumindest abschnittweise größer ist als deren Breite, einen Abstand zu einem Messelement der Sensorelektronik aufweist, wobei der Abstand kleiner ist als 10 mm, insbesondere kleiner ist als 5 mm, insbesondere kleiner ist als 4 mm.

Alternativ oder ergänzend kann vorgesehen sein, dass die Öffnung, deren Höhe zumindest abschnittweise größer ist als deren Breite, einen Abstand zu einem Messelement der Sensorelektronik aufweist, wobei der Abstand höchstens dem Zehnfachen, insbesondere höchstens dem Fünffachen der Breite der Öffnung entspricht.

Gemäß einem zweiten Aspekt betrifft die Erfindung ein Kraftfahrzeug, mit einem erfindungsgemäßen Luftmassensensor.

Das Kraftfahrzeug kann einen Verbrennungsmotor aufweisen, wobei der Luftmassensensor in einer Ansaugleitung des Verbrennungsmotors angeordnet ist, um einen Luftmassenstrom innerhalb der Ansaugleitung zu messen. Der Verbrennungsmotor kann einen oder mehrere Turbolader aufweisen.

Nachfolgend wird die Erfindung anhand einer Ausführungsbeispiele darstellenden Zeichnung näher beschrieben. Es zeigen jeweils schematisch:
- Fig. 1: einen erfindungsgemäßen Luftmassensensor in einer perspektivischen Ansicht von oben;
- Fig. 2: den Luftmassensensor aus Fig. 1 ohne Abdeckungen;
- Fig. 3: einen Querschnitt des Luftmassensensors aus Fig. 1 mit einer Ausschnittvergrößerung dieses Querschnitts;
- Fig. 4A: eine weitere Ausgestaltung eines erfindungsgemäßen Luftmassensensors in einem Querschnitt;
- Fig. 4B: eine weitere Ausgestaltung eines erfindungsgemäßen Luftmassensensors in einem Querschnitt;
- Fig. 4C: eine weitere Ausgestaltung eines erfindungsgemäßen Luftmassensensors in einem Querschnitt;
- Fig. 5A: eine weitere Ausgestaltung eines erfindungsgemäßen Luftmassensensors in einem Querschnitt;
- Fig. 5B: eine weitere Ausgestaltung eines erfindungsgemäßen Luftmassensensors in einem Querschnitt;
- Fig. 5C: eine weitere Ausgestaltung eines erfindungsgemäßen Luftmassensensors in einem Querschnitt;
- Fig. 6A: eine weitere Ausgestaltung eines erfindungsgemäßen Luftmassensensors in einem Querschnitt;
- Fig. 6B: eine weitere Ausgestaltung eines erfindungsgemäßen Luftmassensensors in einem Querschnitt;
- Fig. 6C: eine weitere Ausgestaltung eines erfindungsgemäßen Luftmassensensors in einem Querschnitt;
- Fig. 7A: eine weitere Ausgestaltung eines erfindungsgemäßen Luftmassensensors in einem Querschnitt;
- Fig. 7B: eine weitere Ausgestaltung eines erfindungsgemäßen Luftmassensensors in einem Querschnitt;
- Fig. 7C: eine weitere Ausgestaltung eines erfindungsgemäßen Luftmassensensors in einem Querschnitt;
- Fig. 8A: eine weitere Ausgestaltung eines erfindungsgemäßen Luftmassensensors in einem Querschnitt;
- Fig. 8B: eine weitere Ausgestaltung eines erfindungsgemäßen Luftmassensensors in einem Querschnitt;
- Fig. 8C: eine weitere Ausgestaltung eines erfindungsgemäßen Luftmassensensors in einem Querschnitt;
- Fig. 9A: eine weitere Ausgestaltung eines erfindungsgemäßen Luftmassensensors in einem Querschnitt;
- Fig. 9B: eine weitere Ausgestaltung eines erfindungsgemäßen Luftmassensensors in einem Querschnitt;
- Fig. 9C: eine weitere Ausgestaltung eines erfindungsgemäßen Luftmassensensors in einem Querschnitt;
- Fig. 10: ein erfindungsgemäßes Kraftfahrzeug in einer perspektivischen Ansicht von oben.

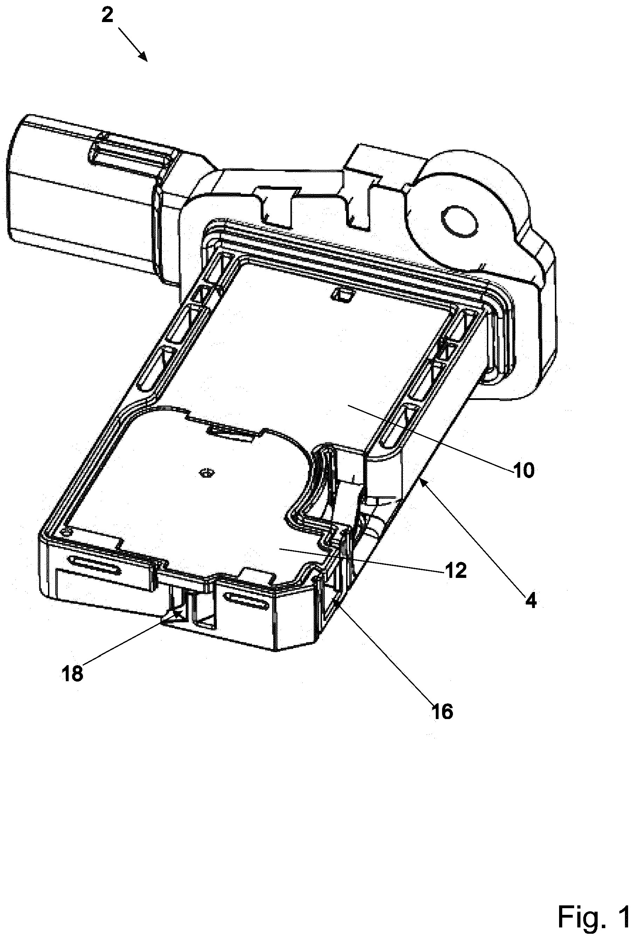

Fig. 1 zeigt einen Luftmassensensor 2 zum Bestimmen eines Luftmassenstroms.

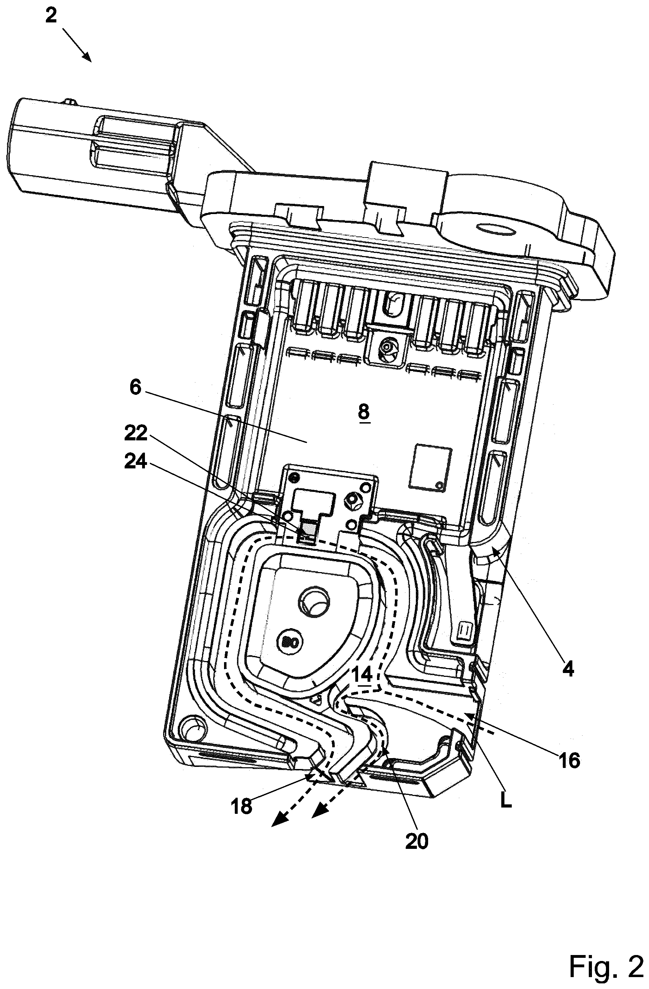

Der Luftmassensensor 2 hat ein Gehäuse 4. Der Luftmassensensor 2 hat eine Sensorelektronik 6, wobei die Sensorelektronik 6 in einer Elektronikkammer 8 des Gehäuses 4 angeordnet ist (Fig. 2). Zur Veranschaulichung der Elektronikkammer 8 und der Sensorelektronik 6 sind in Fig. 2 Abdeckungen 10, 12 bzw. Deckel 10, 12 des Gehäuses 4 ausgeblendet.

Das Gehäuse 4 weist einen Strömungskanal 14 zum Durchleiten eines zu messenden Luftmassenstroms L durch das Gehäuse 4 auf.

Der Strömungskanal 14 hat eine Einlassöffnung 16 zum Einleiten des Luftmassenstroms L in das Gehäuse 4. Der Strömungskanal 14 hat eine Auslassöffnung 18 zum Abführen des Luftmassenstroms L aus dem Gehäuse 4.

Der Strömungskanal 14 hat einen Bypass 20, so dass ein Teil des Luftmassenstroms L nicht zu einer Messstelle 22 des Luftmassensensors 2 strömt, sondern vor der Messstelle 22 abgezweigt und wieder aus dem Gehäuse 4 geleitet wird.

Im Bereich der Messstelle 22 ist ein Messelement 24 der Sensorelektronik 6 angeordnet. Das Messelement 24 ist ein thermisches Messelement 24 - und zwar vorliegend ein Heißfilm-Luftmassenmesselement 24.

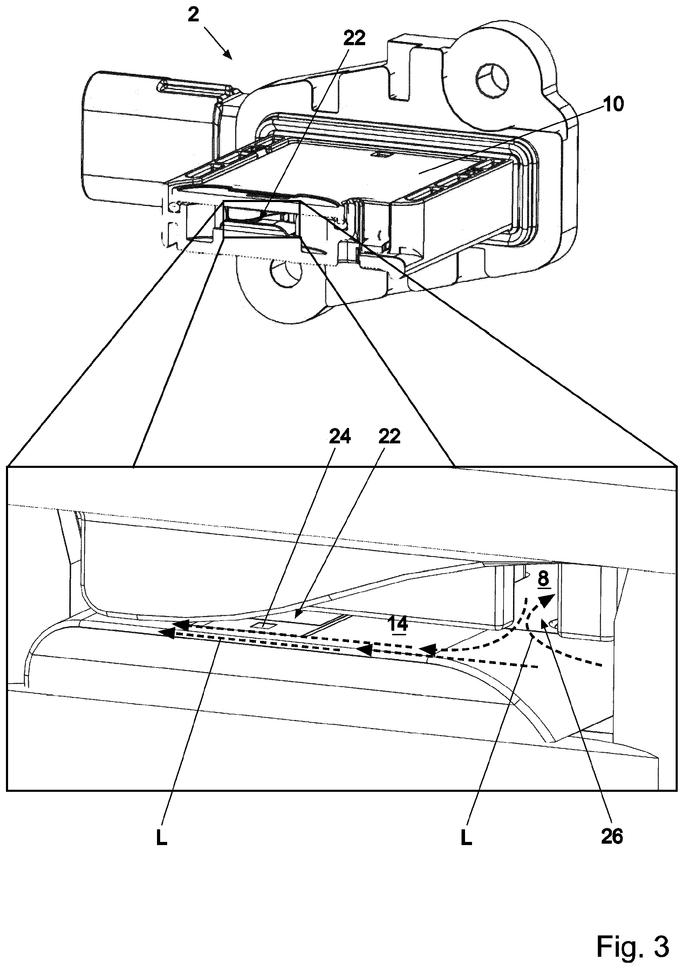

Der Strömungskanal 14 und die Elektronikkammer 8 sind über eine Öffnung 26 miteinander verbunden (Fig. 3), wobei die Elektronikkammer 8 ein Druckausgleichsvolumen für den Strömungskanal 14 bildet. Mit anderen Worten besteht zwischen der Elektronikkammer 8 und dem Strömungskanal 14 eine Fluidverbindung, so dass Luft des Luftmassenstroms L aus dem Strömungskanal 14 in die Elektronikkammer 8 einströmen kann und aus der Elektronikkammer 8 in den Strömungskanal 14 strömen kann.

Ein freies Volumen der Elektronikkammer 8, das zum Druckausgleich vorgesehen und nicht durch die Sensorelektronik 6 eingenommen ist, beträgt mehr als 0,5 cm³ und weniger als 20 cm³.

Die Öffnung 26 ist gemäß Fig. 3 stromaufwärts des Messelements 24 der Sensorelektronik 6 angeordnet.

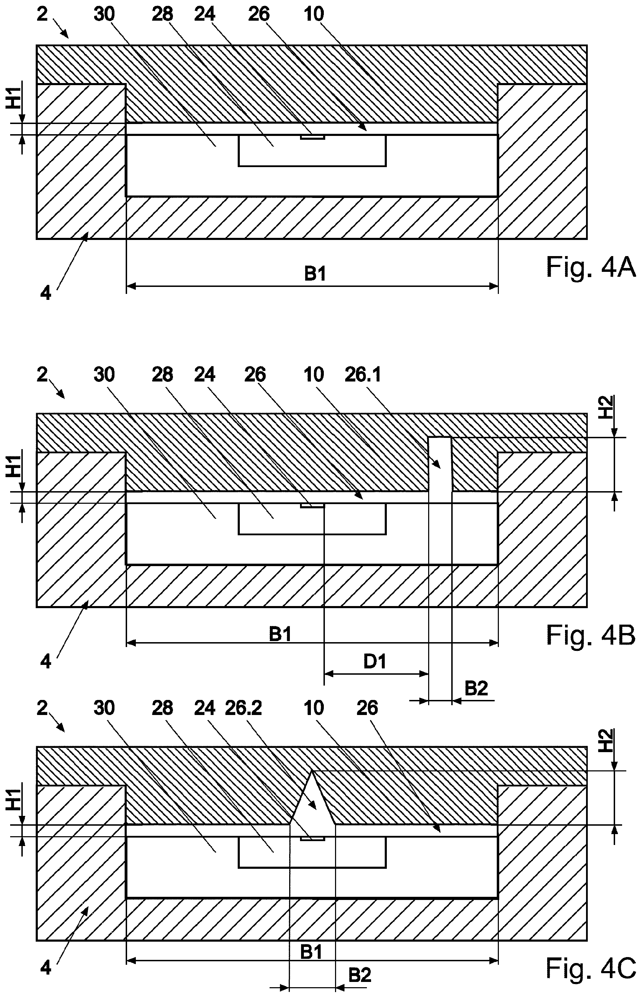

Nachfolgend werden beispielhaft einige Varianten zur konstruktiven Ausgestaltung der Öffnung 26 beschrieben. Die Figuren 4A - 9C zeigen jeweils schematisch Querschnitte von Ausgestaltungen von Luftmassensensoren 2, analog zum Querschnitt gemäß Fig. 3. Dabei ist das Messelement 24 auf einer Platine 28 angeordnet, die von einer Grundplatte 30 getragen wird. Weiter sind der Deckel 10 des Gehäuses 4 und das Gehäuse 4 dargestellt.

Die Öffnung 26 kann ein Spalt 26 sein, der eine Höhe H1 und eine Breite B1 aufweist (Fig. 4A). Der Spalt 26 weist gemäß Fig. 4A eine Höhe H1 von 0,1 mm auf. Gemäß alternativer Ausgestaltung weist der Spalt 26 beispielsweise eine Höhe H1 zwischen 0,05 mm bis zu 0,2 mm auf. Der Spalt 26 weist vorliegend über die gesamte Breite B1 hinweg betrachtet eine konstante Höhe H1 auf. Die Breite B1 kann bis zu 10 mm betragen.

Wie in Fig. 4B gezeigt, kann die Öffnung 26 abschnittsweise eine Höhe H1 aufweisen und abschnittsweise eine Höhe H2 aufweisen, die größer ist als die Höhe H1. Die Höhe H2 kann beispielsweise bis zu 3 mm oder bis zu 2 mm betragen, wobei eine Breite B2 beispielsweise bis zu 0,3 mm, bis zu 0,2 mm oder bis zu 0,1 mm betragen kann. Die Öffnung 26 kann lokal z.B. eine rechteckige Durchgangsöffnung 26.1 aufweisen (Fig. 4B) oder eine dreieckige Durchgangsöffnung 26.2 aufweisen (Fig. 4C). Eine solche Durchgangsöffnung 26.1, 26.2 bzw. Nut 26.1, 26.2 kann in den Deckel 10 eingebracht sein.

Die Durchgangsöffnung 26.1 der Öffnung 26 weist eine Höhe H2 auf, die größer ist als deren Breite B2. Die Durchgangsöffnung 26.1 weist einen Abstand D1 zu dem Messelement 24 auf, der weniger als dem Zahnfachen der Breite B2 der Durchgangsöffnung 26.1 entspricht, wobei der Abstand D1 vorliegend kleiner als 10 mm ist.

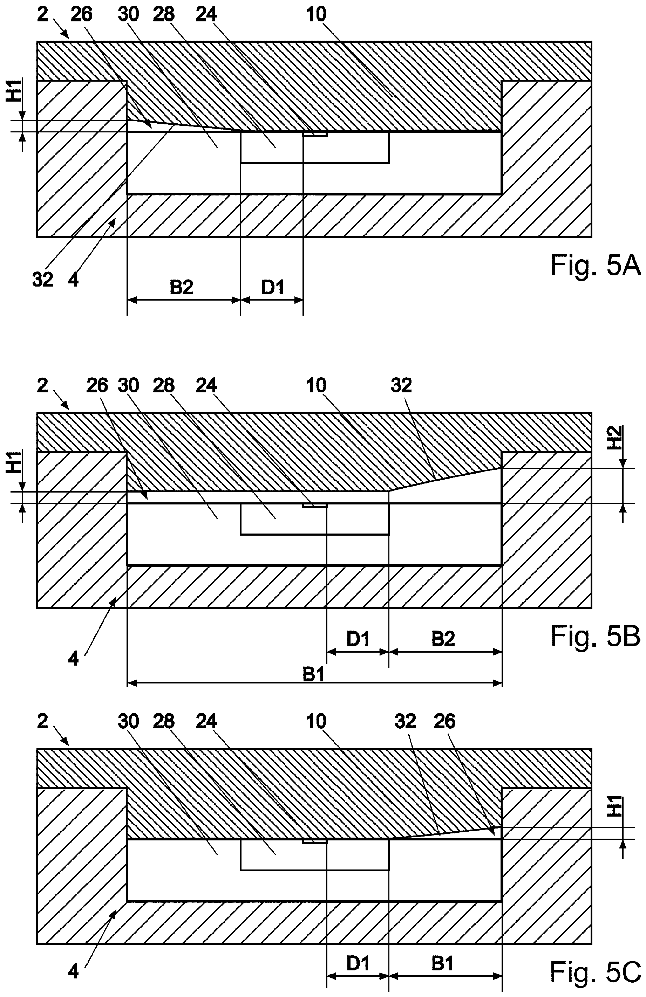

Gemäß Fig. 5A weist der Deckel 10 stromabwärts des Messelements 24 eine Fase 32 der Höhe H1 und der Breite B2 auf, die die Öffnung 26 begrenzt. Die Öffnung 26 weist einen Abstand D1 zu dem Messelement 24 auf, der kleiner als 5 mm ist.

Eine solche Fase 32 kann mit einem durchgehenden Spalt kombiniert werden, wie Fig. 5B zeigt. Der Beginn der Fase 32 weist einen Abstand D1 zu dem Messelement 24 auf, der kleiner als 5 mm ist.

Fig. 5C zeigt eine Fase 32 stromaufwärts des Messelements 24. Die durch die Fase 26 gebildete Öffnung 26 weist einen Abstand D1 zu dem Messelement 24 auf, der kleiner als 5 mm ist.

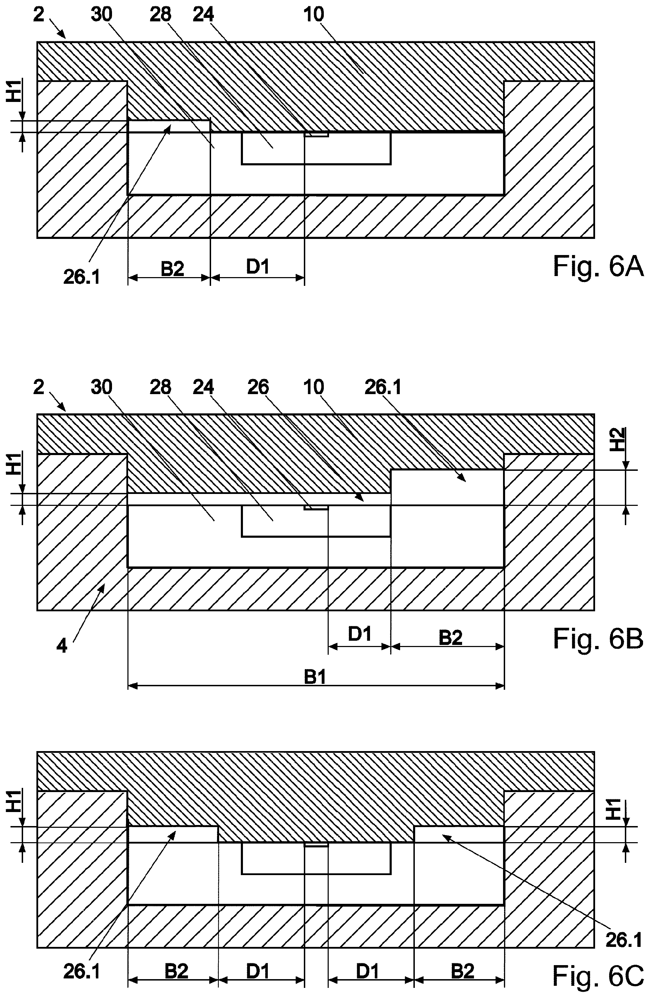

Die Figuren 6A, 6B und 6C zeigen weitere Varianten zur Gestaltung der Öffnung 26, wobei rechteckige Durchgangsöffnungen 26.1 für sich genommen (Fig. 6A, Fig. 6C) oder in Kombination mit einem durchgehenden Spalt gezeigt sind. Die rechteckigen Durchgangsöffnungen 26.1 weisen einen Abstand D1 zu dem Messelement auf, der kleiner als 5 mm ist

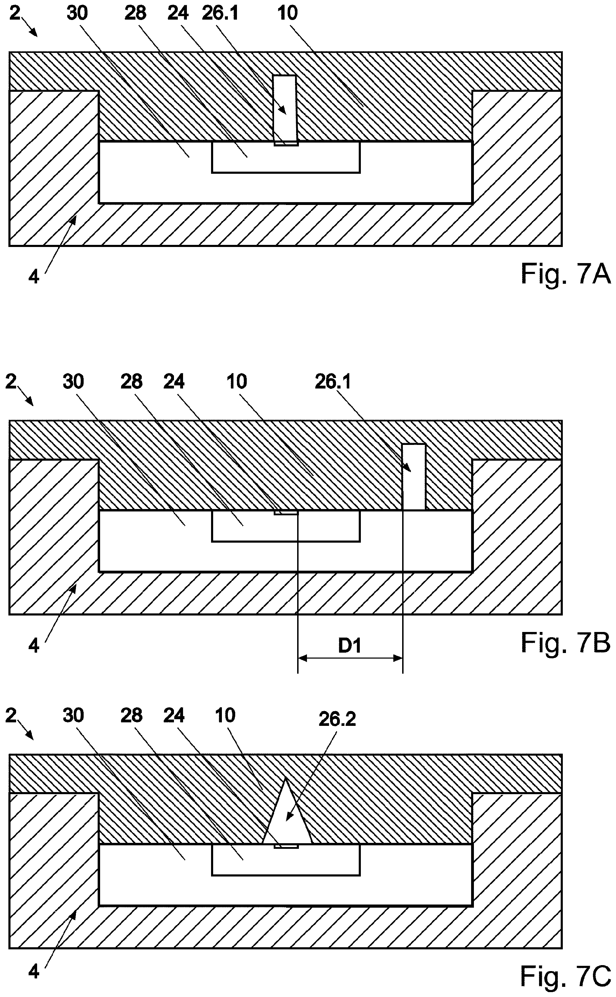

Die Figuren 7A, 7B und 7C zeigen weitere Varianten zur Gestaltung der Öffnung 26, und zwar in Form von Öffnungen 26.1 und 26.2, die auf Höhe des Messelements 24 oder stromaufwärts des Messelements 24 angeordnet sein können. Die Öffnung 26.1 gemäß Fig. 7B weist einen Abstand D1 zu dem Messelement auf, der kleiner als 5 mm ist.

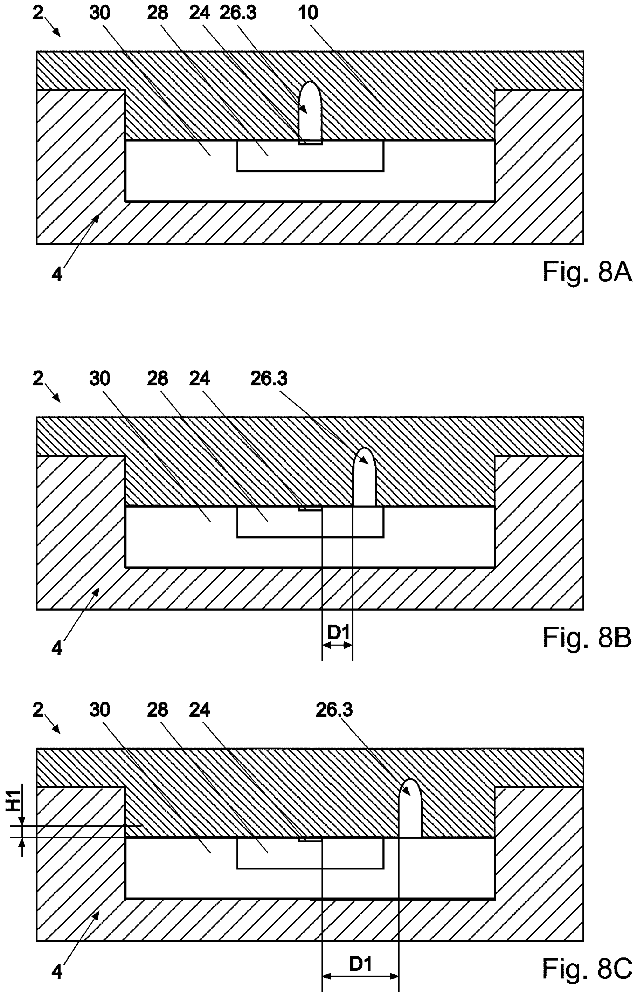

Die Figuren 8A, 8B und 8C zeigen weitere Varianten zur Gestaltung der Öffnung 26, und zwar in Form von Öffnungen 26.3, die auf Höhe des Messelements 24 oder stromaufwärts des Messelements 24 angeordnet sein können. Die Öffnungen 26.3 gemäß Fig. 8B und 8C weisen jeweils einen Abstand D1 zu dem Messelement 24 auf, der kleiner als 5 mm ist.

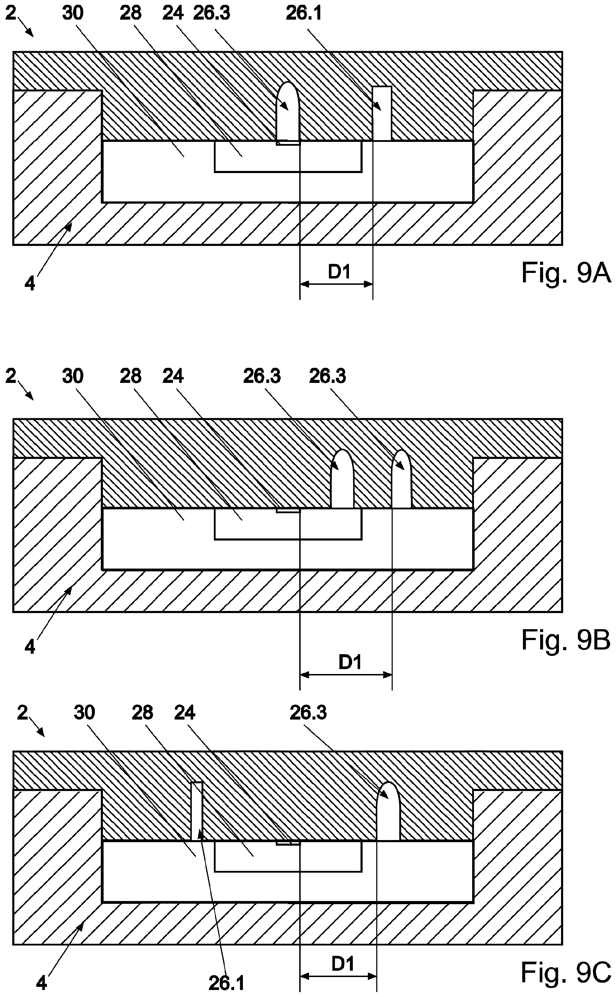

Die Figuren 9A, 9B und 9C zeigen weitere Varianten zur Gestaltung der Öffnung 26, und zwar in Form von Öffnungen 26.1 und 26.3, die auf Höhe des Messelements 24 oder stromaufwärts oder stromabwärts des Messelements 24 angeordnet sein können. Die Öffnung 26.1 gemäß Fig. 9A und die Öffnungen 26.3 und 26.1 gemäß der Figuren 9B und 9C weisen jeweils einen Abstand D1 zu dem Messelement 24 auf, der kleiner als 5 mm ist.

Es versteht sich, dass auch die Varianten gemäß 7A - 9C mit einem durchgehenden Spalt kombinierbar sind.

Ein jeweiliger Luftmassensensor 2 ist zur Messung des Luftmassenstroms und zudem zum Messen des Drucks, der Feuchtigkeit und der Temperatur des Luftmassenstroms eingerichtet.

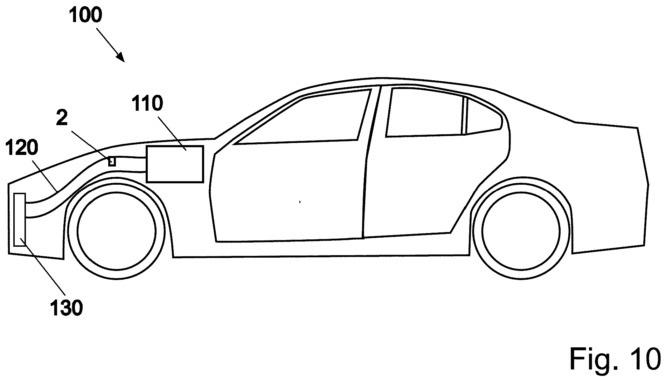

Fig. 10 zeigt ein Kraftfahrzeug 100, mit einem turboaufgeladenen Verbrennungsmotor 110 und mit einem Luftmassensensor 2, wobei der Luftmassensensor 2 in einer Ansaugleitung 120 des Verbrennungsmotors 110 angeordnet ist, um einen Luftmassenstrom innerhalb der Ansaugleitung 120 zu messen. Die Ansaugleitung 120 ist mit einem Ladeluftkühler 130 verbunden.

Das Kraftfahrzeug 100 kann gemäßer alternativer Ausgestaltungen der Erfindung ein Hybridfahrzeug sein, das ergänzend zu dem Verbrennungsmotor 110 mindestens einen Elektromotor mit einer zugeordneten Traktionsbatterie hat.

## Patentansprüche

1. Luftmassensensor zum Bestimmen eines Luftmassenstroms,
- mit einem Gehäuse (4) und
- mit einer Sensorelektronik (6),
- wobei die Sensorelektronik (6) zumindest teilweise in einer Elektronikkammer (8) des Gehäuses (4) angeordnet ist,
- wobei das Gehäuse (4) einen Strömungskanal (14) zum Durchleiten eines zu messenden Luftmassenstroms (L) durch das Gehäuse (4) aufweist,
**dadurch gekennzeichnet, dass**
- der Strömungskanal (14) und die Elektronikkammer (8) über eine Öffnung (26) miteinander verbunden sind, wobei die Elektronikkammer (8) ein Druckausgleichsvolumen für den Strömungskanal (14) bildet.

2. Luftmassensensor nach Anspruch 1,
**dadurch gekennzeichnet, dass**
- ein freies Volumen der Elektronikkammer (8), das zum Druckausgleich vorgesehen ist, mehr als 0,5 cm³ beträgt und weniger als 20 cm³ beträgt,
- insbesondere mehr als 1 cm³ beträgt und weniger als 10 cm³ beträgt.

3. Luftmassensensor nach einem der voranstehenden Ansprüche,
**dadurch gekennzeichnet, dass**
- die Öffnung (26) zumindest abschnittsweise einen Spalt aufweist und
- der Spalt insbesondere eine Höhe (H1) ausgewählt aus einem Bereich zwischen einschließlich 0,02 mm bis einschließlich 0,3 mm aufweist,
- insbesondere eine Höhe (H1) ausgewählt aus einem Bereich zwischen einschließlich 0,05 mm bis einschließlich 0,1 mm aufweist.

4. Luftmassensensor nach einem der voranstehenden Ansprüche,
**dadurch gekennzeichnet, dass**
- die Öffnung (26) zumindest abschnittsweise einen polygonalen Querschnitt aufweist, insbesondere einen rechteckigen oder dreieckigen Querschnitt aufweist
und/oder
- die Öffnung (26) zumindest abschnittsweise einen kreis- oder bogenförmigen Querschnitt aufweist.

5. Luftmassensensor nach einem der voranstehenden Ansprüche,
**dadurch gekennzeichnet, dass**
- die Öffnung (26) zumindest abschnittsweise eine Höhe (H1, H2) ausgewählt aus einem Bereich zwischen einschließlich 0,02 mm bis einschließlich 3 mm aufweist, weiter insbesondere eine Höhe (H1, H2) ausgewählt aus einem Bereich zwischen einschließlich 0,05 mm bis einschließlich 1 mm aufweist
und/oder
- die Öffnung (26) zumindest abschnittsweise eine Breite (B1, B2) ausgewählt aus einem Bereich zwischen einschließlich 0,5 mm bis einschließlich 10 mm aufweist, weiter insbesondere eine Breite (B1, B2) ausgewählt aus einem Bereich zwischen einschließlich 1 mm bis einschließlich 5 mm aufweist.

6. Luftmassensensor nach einem der voranstehenden Ansprüche,
**dadurch gekennzeichnet, dass**
- der Luftmassensensor (2) zum Messen einer oder mehrerer der nachfolgen aufgelisteten Parameter eingerichtet ist:
- Druck des Luftmassenstroms;
- Feuchtigkeit des Luftmassenstroms;
- Temperatur des Luftmassenstroms.

7. Luftmassensensor nach einem der voranstehenden Ansprüche,
**dadurch gekennzeichnet, dass**
- ein Messelement (24) der Sensorelektronik ein thermisches Messelement (24) ist, insbesondere ein Heißfilm-Luftmassenmesseelement (24) ist.

8. Luftmassensensor nach Anspruch 7,
**dadurch gekennzeichnet, dass**
- die Öffnung (26) zumindest abschnittsweise stromabwärts eines Messelements (24) der Sensorelektronik (6) angeordnet ist
und/oder
- die Öffnung (26) zumindest abschnittsweise stromaufwärts eines Messelements (24) der Sensorelektronik (8) angeordnet ist
und/oder
- die Öffnung (26) zumindest abschnittsweise auf Höhe eines Messelements (24) der Sensorelektronik (8) angeordnet ist.

9. Luftmassensensor nach einem der voranstehenden Ansprüche,
**dadurch gekennzeichnet, dass**
- die Öffnung (26, 26.1, 26.2, 26.3) einen Abstand (D1) zu einem Messelement (24) der Sensorelektronik (6) aufweist, wobei der Abstand kleiner ist als 10 mm, insbesondere kleiner ist als 5 mm, insbesondere kleiner ist als 4 mm
und/oder
- die Öffnung (26, 26.1, 26.2, 26.3), deren Höhe (H2) zumindest abschnittweise größer ist als deren Breite (B2), einen Abstand (D1) zu einem Messelement (24) der Sensorelektronik (6) aufweist, wobei der Abstand (D1) kleiner ist als 10 mm, insbesondere kleiner ist als 5 mm, insbesondere kleiner ist als 4 mm
und/oder
- die Öffnung (26, 26.1, 26.2, 26.3), deren Höhe (H2) zumindest abschnittweise größer ist als deren Breite (B2), einen Abstand (D1) zu einem Messelement (24) der Sensorelektronik (6) aufweist, wobei der Abstand (D1) höchstens dem Zehnfachen, insbesondere höchstens dem Fünffachen der Breite der Öffnung entspricht.

10. Kraftfahrzeug,
**gekennzeichnet durch**
- einen Luftmassensensor (2) nach einem der Ansprüche 1 - 9.

11. Kraftfahrzeug nach Anspruch 10,
- mit einem Verbrennungsmotor (110),
**dadurch gekennzeichnet, dass**
- der Luftmassensensor (2) in einer Ansaugleitung des Verbrennungsmotors (110) angeordnet ist, um einen Luftmassenstrom (L) innerhalb der Ansaugleitung (120) zu messen.

## Claims

1. Air mass sensor for determining an air mass flow,
- comprising a housing (4) and
- comprising sensor electronics (6),
- wherein the sensor electronics (6) is at least partly located in an electronics chamber (8) of the housing (4),
- wherein the housing (4) has a duct (14) for passing through the housing (4) an air mass flow (L) to be measured,
**characterized in that**
- the duct (14) and the electronics chamber (8) are connected to each other via an opening (26), wherein the electronics chamber (8) forms a pressure compensation volume for the duct (14).

2. Air mass sensor according to Claim 1,
**characterized in that**
- a free volume of the electronics chamber (8) provided for pressure compensation is more than 0.5 cm³ and less than 20 cm³,
- in particular, is more than 1 cm³ and less than 10 cm³.

3. Air mass sensor according to one of the preceding claims,
**characterized in that**
- the opening (26) has a gap at least in portions and
- the gap has, in particular, a height (H1) selected from a range between 0.02 mm and 0.3 mm inclusive,
- in particular has a height (H1) selected from a range between 0.05 mm and 0.1 mm inclusive.

4. Air mass sensor according to one of the preceding claims,
**characterized in that**
- the opening (26) has, at least in portions, a polygonal cross-section, in particular a rectangular or triangular cross-section
and/or
- the opening (26) has, at least in portions, a circular or arcuate cross-section.

5. Air mass sensor according to one of the preceding claims,
**characterized in that**
- the opening (26) has, at least in portions, a height (H1, H2) selected from a range between 0.02 mm and 3 mm inclusive, further in particular a height (H1, H2) selected from a range between 0.05 mm and 1 mm inclusive and/or
- the opening (26) has, at least in portions, a width (B1, B2) selected from a range between 0.5 mm and 10 mm inclusive, further in particular a width (B1, B2) selected from a range between 1 mm and 5 mm inclusive.

6. Air mass sensor according to one of the preceding claims,
**characterized in that**
- the air mass sensor (2) is set up to measure one or more of the parameters listed below:
- pressure of the air mass flow;
- humidity of the air mass flow;
- temperature of the air mass flow.

7. Air mass sensor according to one of the preceding claims,
**characterized in that**
- one measuring element (24) of the sensor electronics is a thermal measuring element (24), in particular a hot film air mass measuring element (24).

8. Air mass sensor according to Claim 7,
**characterized in that**
- the opening (26) is arranged at least in portions downstream of a measuring element (24) of the sensor electronics (6)
and/or
- the opening (26) is arranged at least in portions upstream of a measuring element (24) of the sensor electronics (8)
and/or
- the opening (26) is arranged at least in portions at the level of a measuring element (24) of the sensor electronics (8).

9. Air mass sensor according to one of the preceding claims,
**characterized in that**
- the opening (26, 26.1, 26.2, 26.3) has a distance (D1) to a measuring element (24) of the sensor electronics (6), wherein the distance is less than 10 mm, in particular less than 5 mm, in particular less than 4 mm
and/or
- the opening (26, 26.1, 26.2, 26.3), the height (H2) of which is greater than its width (B2), at least in portions, has a distance (D1) to a measuring element (24) of the sensor electronics (6), wherein the distance (D1) is less than 10 mm, in particular less than 5 mm, in particular less than 4 mm
and/or
- the opening (26, 26.1, 26.2, 26.3), the height (H2) of which is greater than its width (B2) at least in portions, has a distance (D1) to a measuring element (24) of the sensor electronics (6), wherein the distance (D1) corresponds at most to ten times, in particular at most to five times, the width of the opening.

10. Motor vehicle,
**characterized by**
- an air mass sensor (2) according to one of Claims 1 - 9.

11. Motor vehicle according to Claim 10,
- comprising an internal combustion engine (110),
**characterized in that**
- the air mass sensor (2) is arranged in an intake line of the internal combustion engine (110) to measure an air mass flow (L) within the intake line (120).

## Revendications

1. Capteur de masse d'air pour déterminer un débit massique d'air,
- comprenant un boîtier (4) et
- comprenant un système électronique (6) de capteur,
- le système électronique (6) de capteur étant agencé au moins en partie dans une chambre (8) de système électronique du boîtier (4),
- le boîtier (4) comportant un canal d'écoulement (14) pour conduire un débit massique d'air (L) à mesurer à travers le boîtier (4),
**caractérisé en ce que**
- le canal d'écoulement (14) et la chambre (8) de système électronique sont reliés entre eux par une ouverture (26), la chambre (8) de système électronique formant un volume d'équilibrage de pression pour le canal d'écoulement (14).

2. Capteur de masse d'air selon la revendication 1,
**caractérisé en ce que**
- le volume libre de la chambre (8) de système électronique prévu pour la compensation de pression est supérieur à 0,5cm³ et inférieur à 20cm³,
- en particulier supérieur à 1cm³ et inférieur à 10cm³.

3. Capteur de masse d'air selon l'une des revendications précédentes,
**caractérisé en ce que**
- l'ouverture (26) présente au moins par endroits une fente et
- la fente présente en particulier une hauteur (H1) choisie dans une gamme comprise entre 0,02mm et 0,3mm inclus,
- en particulier une hauteur (H1) choisie dans une gamme comprise entre 0,05mm et 0,1mm inclus.

4. Capteur de masse d'air selon l'une des revendications précédentes,
**caractérisé en ce que**
- l'ouverture (26) présente au moins par endroits une section transversale polygonale, en particulier une section transversale rectangulaire ou triangulaire
et/ou
- l'ouverture (26) présente au moins par endroits une section transversale circulaire ou arquée.

5. Capteur de masse d'air selon l'une des revendications précédentes,
**caractérisé en ce que**
- l'ouverture (26) présente au moins par endroits une hauteur (H1, H2) choisie dans une gamme allant de 0,02mm à 3mm inclus, et en particulier une hauteur (H1, H2) choisie dans une gamme allant de 0,05mm à 1mm inclus
et/ou
- l'ouverture (26) présente, au moins par endroits, une largeur (B1, B2) choisie dans une gamme allant de 0,5mm et 10mm inclus, et en particulier une largeur (B1, B2) choisie dans une gamme allant de 1mm et 5mm inclus.

6. Capteur de masse d'air selon l'une des revendications précédentes,
**caractérisé en ce que**
- le capteur de masse d'air (2) est conçu pour mesurer un ou plusieurs des paramètres énumérés ci-dessous :
- pression du flux de masse d'air ;
- humidité du flux de masse d'air ;
- température du flux de masse d'air.

7. Capteur de masse d'air selon l'une des revendications précédentes,
**caractérisé en ce que**
- un élément de mesure (24) du système électronique du capteur est un élément de mesure thermique (24), en particulier un élément de mesure de masse d'air à film chaud (24).

8. Capteur de masse d'air selon la revendication 7,
**caractérisé en ce que**
- l'ouverture (26) est aménagée au moins partiellement en aval d'un élément de mesure (24) du système électronique du capteur (6)
et/ou
- l'ouverture (26) est aménagée au moins partiellement en amont d'un élément de mesure (24) du système électronique du capteur (8)
et/ou
- l'ouverture (26) est aménagée au moins partiellement à hauteur d'un élément de mesure (24) du système électronique du capteur (8).

9. Capteur de masse d'air selon l'une des revendications précédentes,
**caractérisé en ce que**
- l'ouverture (26, 26.1, 26.2, 26.3) présente une distance (D1) par rapport à un élément de mesure (24) du système électronique (6) de capteur, la distance étant inférieure à 10mm, en particulier inférieure à 5mm, en particulier inférieure à 4mm
et/ou
- l'ouverture (26, 26.1, 26.2, 26.3), dont la hauteur (H2) est au moins partiellement supérieure à sa largeur (B2), présente une distance (D1) par rapport à un élément de mesure (24) du système électronique (6) de capteur, la distance (D1) étant inférieure à 10mm, en particulier inférieure à 5mm, en particulier inférieure à 4mm
et/ou
- l'ouverture (26, 26.1, 26.2, 26.3), dont la hauteur (H2) est au moins partiellement supérieure à sa largeur (B2), présente une distance (D1) par rapport à un élément de mesure (24) du système électronique du capteur (6), la distance (D1) correspondant au maximum à dix fois, en particulier au maximum à cinq fois la largeur de l'ouverture.

10. Véhicule automobile,
**caractérisé par**
- un capteur de masse d'air (2) selon l'une des revendications 1 à 9.

11. Véhicule automobile selon la revendication 10,
- comprenant un moteur à combustion interne (110),
**caractérisé en ce que**
- le capteur de masse d'air (2) est agencé dans une conduite d'admission du moteur à combustion interne (110) afin de mesurer un débit de masse d'air (L) à l'intérieur de la conduite d'admission (120).
